(19) Europäisches Patentamt
European Patent Office
Office européen des brevets

(11) **EP 4 280 108 A1**

(12) **EUROPEAN PATENT APPLICATION**

(43) Date of publication:
**22.11.2023 Bulletin 2023/47**

(21) Application number: **22173728.1**

(22) Date of filing: **17.05.2022**

(51) International Patent Classification (IPC):
**G06N 3/04** *(2023.01)* **G06N 5/02** *(2023.01)*

(52) Cooperative Patent Classification (CPC):
**G06N 3/042; G06N 5/02; G06N 5/045;**
G06N 3/0464

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Robert Bosch GmbH
70442 Stuttgart (DE)**

(72) Inventors:
• **Domokos, Csaba
75397 Simmozheim (DE)**
• **Stepanova, Daria
71229 Leonberg (DE)**
• **Tran, Trung Kien
70569 Stuttgart (DE)**
• **Ismaeil, Youmna Salah Mahmoud
70176 Stuttgart (DE)**
• **Saranrittichai, Piyapat
90459 Nuernberg (DE)**

(54) **DEVICE AND COMPUTER-IMPLEMENTED METHOD FOR PROCESSING DIGITAL IMAGES**

(57) Device and computer-implemented method for processing digital images, comprising providing (200) a digital image, providing (202) a knowledge base, in particular a knowledge graph, comprising an attribute describing a semantic property, providing (204) a neural network that comprises neurons, wherein the neural network is adapted for processing images, determining (206) a neuron that activates when processing the image with the neural network, correlating (216) the neuron with the attribute.

Fig. 2

**Description**

Background

The invention concerns a device and a computer-implemented method for processing digital images.

Convolutional neural networks, CNNs, are well known for their capacity to learn different powerful representations of the input in their consecutive layers. It is also well known that they process images in a way that is not always intuitive to humans, e.g., noise that is imperceptible to humans can dramatically mislead a neural network. This has led to an increased interest in methods that make the behavior of a trained CNN more interpretable by trying to assign human-interpretable concepts, e.g., face, to the neurons in the intermediate layers, often without explicit supervision.

An important class of methods does this by using images in which segments are labeled. More specifically, one tries to find out which neurons are activated by particular image segments, and in that manner, associate these neurons with the label of the segment. For instance, if, over multiple images, a particular neuron tends to be active for the image segments labeled with table, one could argue that this neuron recognizes tables, and neurons in later layers essentially use this high-level information to decide whether the image shows, e.g., an office. The limitation in these methods is that they rely on labeled images, which are often not readily available and can be expensive to construct.

Bau, D., Zhou, B., Khosla, A., Oliva, A., Torralba, A.: Network dissection: Quantifying interpretability of deep visual representations. In: CVPR. pp. 3319-3327 (2017) and Mu, J., Andreas, J.: Compositional explanations of neurons. In: NeurIPS (2020) discloses examples of this class of methods.

Disclosure of the invention

The device and computer-implemented method according to the independent claims provide an alternative.

The computer-implemented method for processing digital images comprises providing a digital image, providing a knowledge base, in particular a knowledge graph, comprising an attribute describing a semantic property, providing a neural network that comprises neurons, wherein the neural network is adapted for processing images, determining a neuron that activates when processing the image with the neural network, correlating the neuron with the attribute. Instead of using labeled images, this method uses a knowledge base, e.g. a knowledge graph, KG, that contains symbolic descriptions of objects. Speer, R., Chin, J., Havasi, C.: Conceptnet 5.5: An open multilingual graph of general knowledge. In: AAAI 2017. pp. 4444-4451 (2017) and Tandon, N., de Melo, G., Suchanek, F.M., Weikum, G.: Webchild: harvesting and organizing commonsense knowledge from the web. In: WSDM. ACM (2014) describe examples for such KGs. These KGs store semantic information of concepts. Concepts in this context are for example "offices contain tables", "kitchens contain ovens". Concepts are for example acquired from heterogeneous Web sources such as textual documents. The method exploits such KGs by linking the neurons of a network and semantic properties from the knowledge graph. These are helpful for facilitating explainability of the deep representations, which is essential in safety-critical applications.

The method preferably comprises providing the neural network comprising a fully connected layer of neurons, and determining the neuron from neurons of the fully connected layer. The neurons of fully connected layers reflect high-level abstract visual features. The correlation of these neurons with the KG explain these visual features. A particular neuron may be active for pictures of offices and kitchens, but not for pictures of bathrooms. The KG may comprise an attribute indicating that offices and kitchens tend to contain tables while bathrooms do not. Thus, the correlation of this neuron with the attribute is an explanation that the neuron reflects the presence of a table.

The method may comprise determining a measure for a likelihood that the object is visible in the image, and either correlating the neuron with the attribute if the likelihood exceeds a first threshold or not correlating the neuron with the attribute otherwise. This improves the correlations further.

The method may comprise correlating the neuron with the attribute if the likelihood is below a second threshold or not correlating the neuron with the attribute otherwise. This filters out meaningless correlations.

The method may comprise adding the neuron to a transaction for the image if an activation of the neuron exceeds a threshold or not adding the neuron to a transaction for the image otherwise. Thus, the neuron is added to the transaction unless it is insignificant according to the neural network. The attribute may represent a typically visible property. Thus, the neuron activation is correlated with the attribute representing such property.

The method preferably comprises determining a class of the image depending on an output that the neural network produces when processing the image, and adding the attribute to a transaction for the image if the knowledge base comprises an entry linking the class and the attribute in particular with a predicate or not adding the neuron to a transaction for the image otherwise. The method exploits the KGs by linking the class to one attribute or more attributes. The attributes may represent typically visible properties of this class. Thus, the neuron activation is correlated with the attribute representing such properties.

The method preferably comprises processing a plurality of images, determining a plurality of transactions for the plurality of images and determining the measure depending on a number of occurrences of the neuron and a number of occurrences of the attribute in the plurality of transactions. The plurality of transactions form a transaction data set that is exploited to determine the measure.

Providing the digital image preferably comprises receiving sensor signals characterizing the digital image or receiving the digital image, wherein the digital image is a video image, a radar image, a LiDAR image, an ultrasonic image, a motion image, a thermal image. This way, image processing is improved e.g. for computer vision or other applications based on such images.

The method preferably comprises determining an output comprising an explanation of the neural network prediction in particular of the class of the digital image and/or an output comprising an instruction for operating a technical system, in particular a robot, preferably an autonomous vehicle, a manufacturing machine, a household appliance, a power tool, an access control system or a personal assistant system.

The device for processing digital images is adapted to execute the method and provides advantages in accordance to the advantages that the method provides.

The device preferably comprises at least one processor and at least one memory, wherein the at least one memory is adapted to store images and a knowledge base and instructions that when executed by the at least one processor cause the device to execute the method.

A computer program that comprises computer readable instructions that when executed by a computer cause the computer to execute the method provides advantages according to the advantages the method provides.

Further advantageous embodiments are derivable from the following description and the drawing. In the drawing:

    Fig. 1 schematically depicts a device for processing digital images,
    Fig. 2 schematically depicts a method,
    Fig. 3 schematically depicts a knowledge base,
    Fig. 4 schematically depicts a neural network,
    Fig. 5 schematically depicts a transaction data set.

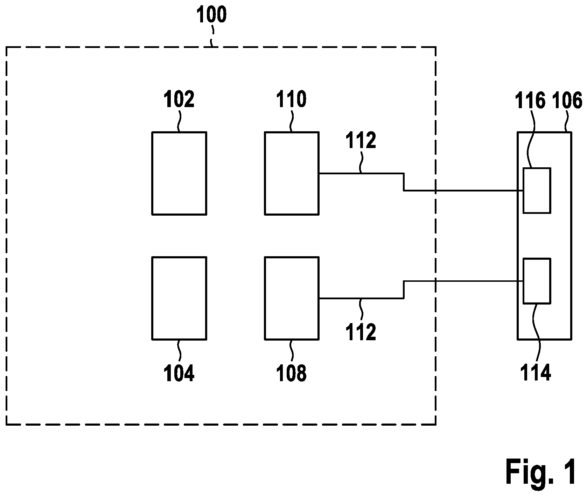

Figure 1 schematically depicts a device 100 for processing digital images.

The device 100 is adapted to execute a method for processing digital images that is described below.

The device 100 comprises at least one processor 102and at least one memory 104. The at least one memory 104 in the example is adapted to store images and a knowledge base and instructions that when executed by the at least one processor 102 cause the device 100 to execute the method.

The instructions may be a computer program that comprises computer readable instructions that when executed by a computer cause the computer to execute the method.

The device 100 may be adapted to control a technical system 106.

The device 100 may comprise an output 108 for an instruction or an actuator for controlling the technical system 106.

The technical system 106 may be a robot, preferably an autonomous vehicle, a manufacturing machine, a household appliance, a power tool, an access control system or a personal assistant system.

The device 100 may comprise an interface 110 to capture or receive a digital image. The digital image is for example a video image, a radar image, a LiDAR image, an ultrasonic image, a motion image, a thermal image.

The output 108 and the interface 110 in the example are connected to the technical system 106 by communication lines 112 respectively.

The technical system 106 may comprise the device 100. The technical system 106 in the example comprises an actuator 114 that is adapted to operate the technical system 106 according to the instructions from the device 100. The technical system 106 in the example comprises a camera 116 that is adapted to capture the digital image.

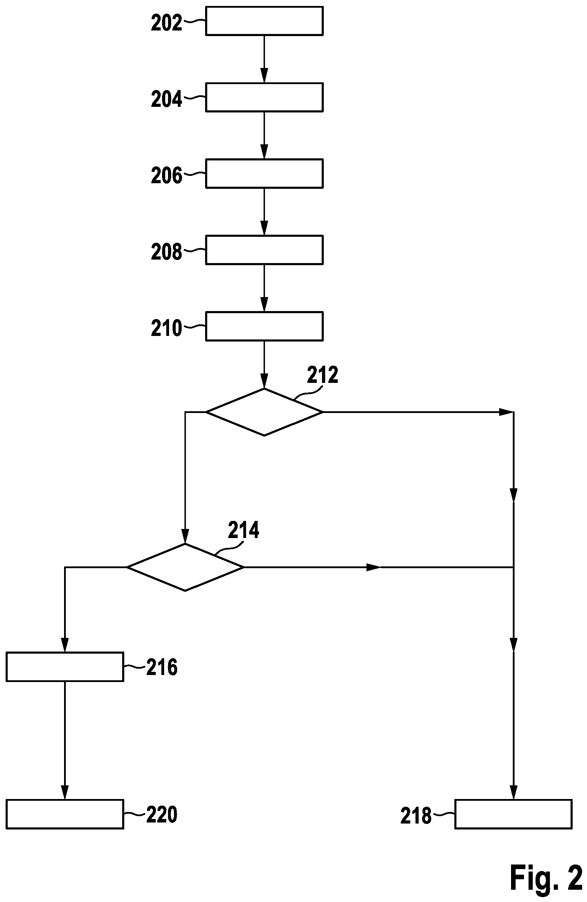

Figure 2 schematically depicts a method, in particular a computer-implemented method, for processing digital images.

The method comprises a step 200.

Step 200 comprises providing a digital image. In the example, a plurality of digital images is provided.

Providing the digital image or the plurality of digital images may comprise receiving sensor signals characterizing the digital image or the plurality of digital images.

Providing the digital image or the plurality of digital images may comprise receiving the digital image or the plurality of digital images.

The method comprises a step 202.

Step 202 comprises providing a knowledge base, in particular a knowledge graph. The knowledge base comprises an attribute describing a semantic property.

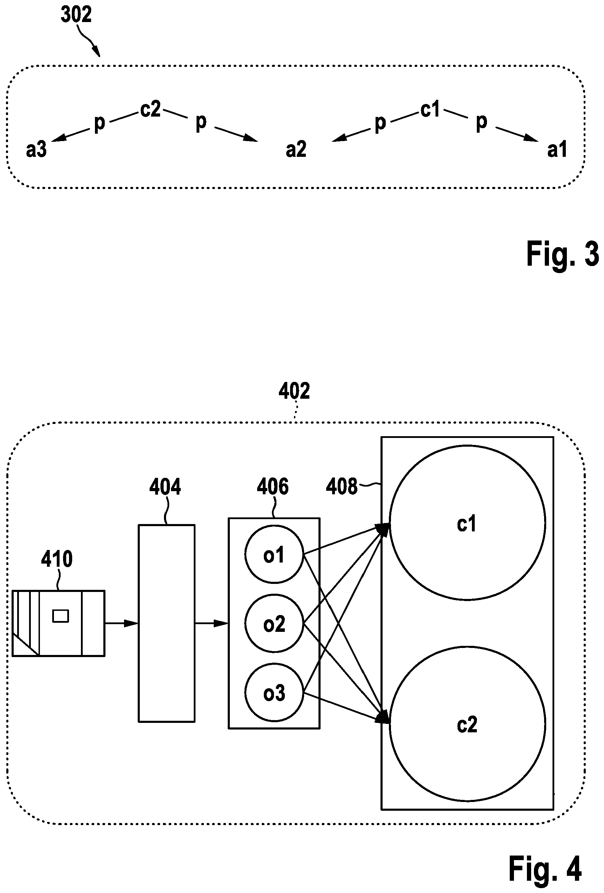

Fig. 3 schematically depicts an exemplary knowledge base 302. Knowledge base 302 in the example comprises a knowledge graph with predicate p. The knowledge graph comprises attributes labelled a1, a2, a3 and classes labelled c1, c2. In the example, a class c is linked to an attribute a by a predicate p as tuple <c,p,a>:

    <c2,p,a3>
    <c2,p,a2>
    <c1,p,a2>
    <c1,p,a1>

The method is not limited to three attributes, two classes and one predicate. The knowledge base may comprise more or less attributes, classes or predicates. The knowledge base may comprise e.g. more than 10 classes, more than 100 classes, more than 1000 classes, more than 10000 classes. The knowledge base may comprise e.g. more than 10 attributes, more than 100 attributes, more than 1000 attributes, more than 10000 attributes. The knowledge base may comprise e.g. more than 10 predicates, more than 100 predicates, more than 1000 predicates, more than 10000 predicates.

For classes $c \in C$ of a set of classes C, perdicates $p \in P$ of a set of predicates P and attributes $a \in A$ of a set of attributes $A$, an exemplare knowledge graph is $G = \{< c, p, a > | c \in C, a \in A\}$. The attributes $a$ may be semantic properties. The predicates p may be visual properties such as *has, hasPart, has Color, hasShape.*

The method comprises a step 204.

Step 204 comprises providing a neural network that comprises neurons. Providing the neural network in one example comprises, providing the neural network comprising a fully connected layer of neurons.

The neural network is adapted for processing images.

Figure 4 schematically depicts an exemplary neural network 402. The neural network 402 comprises at least one layer 404. The at least one layer 404 may comprise an input layer. The at least one layer 404 may comprise one or numerous convolutional layers. In one example, the at least one layer 404 comprises at least one convolutional layer, at least one Rectifier linear unit, ReLU, at least one pooling layer, and/or at least one fully connected layer. The exemplary neural network 402 comprises a fully connected layer 406 between the at least one layer 404 and an output layer 408 of the exemplary neural network 402. In the example, the fully connected layer 406 is the last layer before the output layer 408. The input layer is adapted to receive the digital image. An exemplary digital image 410 is depicted in Figure 4. The plurality of images is in one example processed successively. The input layer 404 may be adapted to accept the plurality of images and process these in parallel. In this case, the output layer 408 is adapted to provide an individual output per image.

For example, a neural network $f$ comprises a fully connected layer $f_l : \mathbb{R}^m \rightarrow \mathbb{R}^n, x \mapsto \sigma(Wx + b)$ where m is a fan-in and n is a fan-out of a given layer I and $\sigma : \mathbb{R}^n \rightarrow \mathbb{R}^n$ is an activation function. For $f_l(x) = [o1, o2, ... on]^T$ the neurons are referred to as o1, o2, ..., on.

The neural network $f$ is trained in the example, for image classification on a labeled image data set $T = \{(I, c) | I : \Omega \rightarrow \mathbb{R}^3\}$ with $c \in C$.

In one example, the labeled image data set T comprises (I1,c1), (I2,c1), (I3,c1), (I4,c2), (I5,c2), (I6,c2), wherein c1 is a first class and c2 is a second class and wherein I1, ..., I3 are three images of the first class c1 and I4, ..., I6 are three images of the second class c2.

The fully connected layer 406 comprises for example three neurons labelled o1, o2, o3.

The fully connected layer 406 may comprise more or less than three neurons. The neural network comprise e.g. more than 10 neurons, more than 100 neurons, more than 1000 neurons, more than 10000 neurons.

The output layer 408 comprises an output for the class c1 labelled c1 and an output for the class c2 labelled c2.

The neural network may comprise as many outputs as the knowledge base comprises classes. The neural network may comprise less outputs than the knowledge base comprises classes. The knowledge base, in particular the knowledge graph, in the example comprises the neural network's classes, i.e. the classes for that the output layer 408 comprises an output.

The method comprises a step 206.

Step 206 comprises determining a neuron that activates when processing the image with the neural network. In one example, the neuron is determined from neurons of the fully connected layer.

The step 206 may comprise determining a class of the image depending on an output that the neural network produces when processing the image.

The class in the example is either c1 or c2.

The step 206 may comprise processing a plurality of images.

The method comprises a step 208.

Step 208 comprises adding the neuron to a transaction for the image if an activation of the neuron exceeds a threshold or not adding the neuron to a transaction for the image otherwise.

The step 208 may comprise adding the attribute to a transaction for the image if the knowledge base comprises an entry linking the class and the attribute in particular with a predicate or not adding the neuron to a transaction for the image otherwise.

The step 208 may comprise determining a plurality of transactions for the plurality of images.

By way of example, determining of a transaction for the plurality of images is described for a predicate p indicating that a class c has an attribute a.

Determining the transaction may comprise determining a binarization.

In an example, the method comprises considering a given data set $S = \{((I, c) | f(I) = c\} \subseteq T$ of images that are correctly classified by the neural network $f$ and a set $N = \{o1, ..., on\}$ of individual neurons from a target layer $f_l$ to detect neurons from N, their activation is compared to the threshold and assigned a binary value $v_0 \in \{0,1\}$. In one example, the binary value 0 is assigned to a neuron, in case its activation exceeds the threshold and otherwise the binary value 1 is assigned to this neuron. In one example, the binary value 1 is assigned to a neuron, in case its activation exceeds the threshold and otherwise the binary value 0 is assigned to this neuron. The images are processed in the example separately. In the example, a set of neurons from N with activations that are higher than the threshold when processing an image are selected and assigned to this image.

The threshold can be given a priori, e.g. for post-ReLU activations, or determined dynamically, e.g. to select a neuron-specific percentile.

The transaction comprises in one example, a unique identification i of an image I and further information $X_i \subseteq \{c\} \cup N \cup A$. In the transaction, a neuron $o \in X_i$ is a neuron $o \in N$ that was identified as active neuron, e.g. as having an activation exceeding the threshold, for the image identified by $i$ and therefore added to the transaction. This means, the neuron has a high value before e.g. a softmax activation when the image identified by $i$ is processed. In the transaction, an attribute $o \in X_i$ is an attribute $a \in A$ that is linked by the knowledge base, e.g. , e.g. by a tupel $< c, p, a > \in G$ to a class c that the neural network outputs when the image identified by $i$ is processed.

In one example, the activated neurons for the six images I1, ..., I6 are provided in the form li:{} wherein i is the index of the image and {} comprise the activated neurons of the neurons o1,o2,o3:

I1: {o1,o3}
I2: {o3}
I3: {o2,o3}
I4: {o1,o3}
I5: {o1,o2}
I6: {o1}

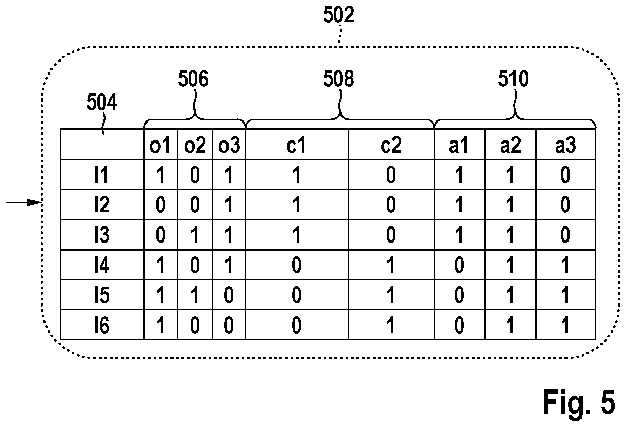

Figure 5 schematically depicts an exemplary transaction data set 502 comprising an exemplary plurality of transactions.

The transaction data set 502 comprises in the example a table with six rows for different images 504 that are labelled I1, I2, I3, I4, I5, I6 in a first column of the table.

The table comprises in the example three columns for neurons 506 that are labelled o1, o2, o3 in the second to third column of the table.

The table comprises in the example two columns for classes 508 that are labelled c1, c2 in the fourth and fifth column of the table.

The table comprises in the example three columns for attributes 510 that are labelled a1, a2, a3 in the sixth to last column of the table.

The method comprises a step 210.

Step 210 comprises determining a measure $J$ for a likelihood that the object is visible in the image.

The step 210 may comprise determining the measure $J$ depending on a number of occurrences of the neuron and a number of occurrences of the attribute in the plurality of transactions.

In one example, the measure is

$$J(o,a) = \frac{supp(o \cup a)}{supp(o) + supp(a) - supp(o \cup a)}$$

The method comprises a step 212.

Step 212 comprises determining whether the likelihood exceeds a first threshold $\Theta$ or not. In case the likelihood exceeds the first threshold, a step 214 is executed. Otherwise, a step 218 is executed.

In one example, correlated pairs (o,a) of neurons o and attributes a are determined for that $J(o, a) \geq \Theta$

In the example, for a given first threshold $\Theta$ = 0,65 and with J(o1,a2)=4/6, J(o1,a3)=3/4, (o3,a1)=3/4, J(o3,a2)=4/6 the resulting alignments are (o1,a3), (o1,a2), (o3,a1), (o3,a2).

Step 214 comprises optionally determining whether the likelihood is below a second threshold $\beta$ or not. The second threshold $\beta$ is in the example larger than the first threshold $\Theta$. In case the likelihood is below the second threshold $\beta$, a step 216 is executed. Otherwise, the step 218 is executed.

In one example, an invalid alignment is an invalid alignment,

1) if $|\{c_i \in C| < c_i, p, a > \in G\}| < 2$
2) if $< c_i, p, a > \in G$, for all $c_j \in C\{c_i\}$, $< c_i, p, a > \notin G$ and $|\{c_i \in C\{c_j\}|J(o, c_j) \geq \beta\}| \geq k - 1$, where k is a parameter $2 \leq k \leq |C|$.

In one example, the parameter is k=2.

Statement 1) means that, if at least two classes have an attribute a, but only less than two out of them are correlated with the neuron o, then the alignment (o,a) is invalid. The second statement means that, if an attribute a is relevant for a single class only, and the number of other classes correlated with the neuron o is larger than the parameter k, then (o,a) is invalid. These two constraints are optionally applied on top of the alignments determined with the first threshold $\Theta$ to get rid of spurious correlations.

In the example, the attribute a2 is relevant for at least two classes. In case the second threshold $\beta$ is the same as the first threshold $\Theta$, J(o1, c2) > $\beta$ but J(o1, c1) $\leq \beta$. Namely, the neuron o1 is only frequently active for images of class c2 but rarely for those of class c1. Therefore, based on constraint 1, (o1,a2) is filtered out. Analogously, (o3,a2) is filtered out.

Step 216 comprises correlating the neuron with the attribute.

In one example, the correlation is (o1,a1).

In step 218, the neuron is not correlated with the attribute.

The method may comprise a step 220.

The step 220 may comprise determining an output comprising an explanation of the neural network prediction in particular of the class of the digital image.

The output may be a set of neuron-attribute pairs of the form (o,a), wherein o is an individual neuron of the neural network f and a is an entity of the knowledge Graph G corresponding to an attribute of a class from C.

The step 220 may comprise determining an output comprising an instruction for operating the technical system.

## Claims

1. Computer-implemented method for processing digital images, **characterized by** providing (200) a digital image, providing (202) a knowledge base, in particular a knowledge graph, comprising an attribute describing a semantic property, providing (204) a neural network that comprises neurons, wherein the neural network is adapted for processing images, determining (206) a neuron that activates when processing the image with the neural network, correlating (216) the neuron with the attribute.

2. Method according to claim 1, **characterized by** providing (204) the neural network comprising a fully connected layer of neurons, and determining (206) the neuron from neurons of the fully connected layer.

3. Method according to one of the previous claims, **characterized by** determining (210) a measure for a likelihood that the object is visible in the image, and either correlating (216) the neuron with the attribute if the likelihood exceeds (212) a first threshold or not correlating (218) the neuron with the attribute otherwise.

4. Method according to one of the previous claims, **characterized by** either correlating (216) the neuron with the attribute if the likelihood is below (214) a second threshold or not correlating (218) the neuron with the attribute otherwise.

5. The method according to one of the previous claims, **characterized by** adding (208) the neuron to a transaction for the image if an activation of the neuron exceeds a threshold or not adding the neuron to a transaction for the image otherwise.

6. The method according to one of the previous claims, **characterized by** determining (206) a class of the image depending on an output that the neural network produces when processing the image, and adding (208) the attribute to a transaction for the image if the knowledge base comprises an entry linking the class and the attribute in particular with a predicate or not adding the neuron to a transaction for the image otherwise.

7. The method according to claim 6, **characterized by** processing a plurality of images (206), determining (208) a plurality of transactions for the plurality of images and determining (210) the measure depending on a number of occurrences of the neuron and a number of occurrences of the attribute in the plurality of transactions.

8. The method according to one of the previous claims, **characterized in that** providing (200) the digital image comprises receiving sensor signals characterizing the digital image or receiving the digital image, wherein the digital image is a video image, a radar image, a LiDAR image, an ultrasonic image, a motion image, a thermal image.

9. The method according to one of the previous claims, **characterized by** determining an output comprising an explanation of the neural network prediction in particular of the class of the digital image and/or an output comprising an instruction for operating a technical system, in particular a robot, preferably an autonomous vehicle, a manufacturing machine, a household appliance, a power tool, an access control system or a personal assistant system.

10. A device (100) for processing digital images, **characterized in that** the device is adapted to execute the method according to one of the claims 1 to 9.

11. The device (100) according to claim 10, **characterized in that** the device (100) comprises at least one processor (102) and at least one memory (104), wherein the at least one memory (104) is adapted to store images and a knowledge base and instructions that when executed by the at least one processor (102) cause the device (100) to execute the method according to one of the claims 1 to 9.

12. Computer program, **characterized in that** the computer program comprises computer readable instructions that when executed by a computer cause the computer to execute the method according to one of the claims 1 to 9.

Fig. 1

Fig. 2

**Fig. 3**

**Fig. 4**

502

|      | o1 | o2 | o3 | c1 | c2 | a1 | a2 | a3 |
|------|----|----|----|----|----|----|----|----|
| I1   | 1  | 0  | 1  | 1  | 0  | 1  | 1  | 0  |
| I2   | 0  | 0  | 1  | 1  | 0  | 1  | 1  | 0  |
| I3   | 0  | 1  | 1  | 1  | 0  | 1  | 1  | 0  |
| I4   | 1  | 0  | 1  | 0  | 1  | 0  | 1  | 1  |
| I5   | 1  | 1  | 0  | 0  | 1  | 0  | 1  | 1  |
| I6   | 1  | 0  | 0  | 0  | 1  | 0  | 1  | 1  |

504    506    508    510

Fig. 5

Europäisches
Patentamt

European
Patent Office

Office européen
des brevets

# EUROPEAN SEARCH REPORT

Application Number

EP 22 17 3728

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HORTA VITOR A. C. ET AL: "Generating Local Textual Explanations for CNNs: A Semantic Approach Based on Knowledge Graphs", AIXIA 2021 – ADVANCES IN ARTIFICIAL INTELLIGENCE: 20TH INTERNATIONAL CONFERENCE OF THE ITALIAN ASSOCIATION FOR ARTIFICIAL INTELLIGENCE, [Online] vol. 13196, 1 December 2021 (2021-12-01), – 3 December 2021 (2021-12-03), pages 532–549, XP055975416, Springer Online Retrieved from the Internet: URL:https://link.springer.com/content/pdf/10.1007/978-3-031-08421-8_37> [retrieved on 2022-10-27] * abstract * * figure 4 * * sections 3 and 4 * ----- | 1-12 | INV. G06N3/04 G06N5/02 |

TECHNICAL FIELDS
SEARCHED      (IPC)

G06N

The present search report has been drawn up for all claims

| Place of search | Date of completion of the search | Examiner |
|---|---|---|
| The Hague | 27 October 2022 | Theissing, Simon |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...................................................................

& : member of the same patent family, corresponding
document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BAU, D. ; ZHOU, B. ; KHOSLA, A. ; OLIVA, A. ; TORRALBA, A.** Network dissection: Quantifying interpretability of deep visual representations. *CVPR,* 2017, 3319-3327
- **MU, J. ; ANDREAS, J.** Compositional explanations of neurons. *NeurIPS,* 2020

- **SPEER, R. ; CHIN, J. ; HAVASI, C.** Conceptnet 5.5: An open multilingual graph of general knowledge. *AAAI,* 2017, 4444-4451
- **TANDON, N. ; DE MELO, G. ; SUCHANEK, F.M. ; WEIKUM, G.** Webchild: harvesting and organizing commonsense knowledge from the web. *WSDM. ACM,* 2014